# EUROPÄISCHE PATENTANMELDUNG

(11) **EP 3 889 556 A1**
(43) Veröffentlichungstag der Anmeldung: **06.10.2021**
(21) Anmeldenummer: 21161396.3
(22) Anmeldetag: 09.03.2021
(51) Int. Cl.: G01F 15/18, G01F 1/66, E03B 7/07, G01D 4/02

(54) **WASSERZÄHLER UND VERFAHREN ZUR BEFESTIGUNG EINES WASSERZÄHLERS AN EINER WASSERLEITUNG**

(30) Priorität: 01.04.2020 DE 102020108989
(71) Anmelder: Grohe AG, 58653 Hemer (DE)
(72) Erfinder: DEPIERE, Bert, 3150 Wakkerzeel (BE); RADERMACHER, Daniel, 40489 Düsseldorf (DE); SCHUBERT, Bastian, 40477 Düsseldorf (DE)

(57) **Zusammenfassung**

Wasserzähler (1), zumindest aufweisend:
- eine Volumenstrommesseinrichtung (2), mittels der von außerhalb einer Wasserleitung (3) ein durch die Wasserleitung (3) strömender Volumenstrom einer Flüssigkeit messbar ist; und
- eine Klemmeinrichtung (4), mittels der der Wasserzähler (1) an die Wasserleitung (3) klemmbar ist.

Zudem wird ein Verfahren zur Befestigung eines Wasserzählers (1) an einer Wasserleitung (3) vorgeschlagen.

## Beschreibung

Die vorliegende Erfindung betrifft einen Wasserzähler und ein Verfahren zur Befestigung eines Wasserzählers an einer Wasserleitung. Derartige Wasserzähler dienen insbesondere der Bestimmung eines Wasserverbrauchs zumindest einer Verbrauchseinheit, wie zum Beispiel einem Wohngebäude, Geschäftsgebäude, einer Wohnung oder einem Hotelzimmer.

Die Befestigung eines Wasserzählers an einer Wasserleitung ist regelmäßig mit einem hohen Montageaufwand verbunden. Dies gilt insbesondere für den Fall, dass Wasserzähler ausgetauscht oder ersetzt werden müssen. Beim Austausch eines Wasserzählers muss die Wasserleitung regelmäßig geschlossen und/oder durchtrennt werden, sodass es zu einer Unterbrechung der Wasserversorgung der zumindest einen Verbrauchseinheit kommen kann. Zudem muss der Austausch durch einen geschulten Installateur erfolgen, wodurch hohe Installationskosten entstehen können.

Aufgabe der Erfindung ist es daher, die mit Bezug auf den Stand der Technik geschilderten Probleme zumindest teilweise zu lösen und insbesondere einen Wasserzähler anzugeben, der mit geringerem Montageaufwand an einer Wasserleitung befestigbar ist. Zudem soll auch ein Verfahren zur Befestigung eines Wasserzählers an einer Wasserleitung angegeben werden, mit dem der Wasserzähler mit geringerem Montageaufwand an der Wasserleitung befestigbar ist.

Diese Aufgaben werden gelöst mit einem Wasserzähler und einem Verfahren gemäß den Merkmalen der unabhängigen Patentansprüche. Weitere vorteilhafte Ausgestaltungen der Erfindung sind in den abhängigen Patentansprüchen angegeben. Es ist darauf hinzuweisen, dass die in den abhängigen Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Wasserzähler bei, der zumindest Folgendes aufweist:
- eine Volumenstrommesseinrichtung, mittels der von außerhalb einer Wasserleitung ein durch die Wasserleitung strömender Volumenstrom einer Flüssigkeit messbar ist; und
- eine Klemmeinrichtung, mittels der der Wasserzähler an die Wasserleitung klemmbar ist.

Der Wasserzähler dient insbesondere der Bestimmung und/oder Abrechnung eines Wasserverbrauchs zumindest eines Verbrauchers bzw. zumindest einer Verbrauchseinheit, wie zum Beispiel einem Wohngebäude, Geschäftsgebäude, einer Wohnung oder einem Hotelzimmer. Hierzu weist der Wasserzähler eine Volumenstrommesseinrichtung auf, mittels der von außerhalb der Wasserleitung ein durch die Wasserleitung strömender Volumenstrom einer Flüssigkeit messbar ist. "Von außerhalb" kann insbesondere bedeuten, dass die Volumenstrommesseinrichtung zur Bestimmung des Volumenstroms keinen physischen Kontakt zu der Flüssigkeit bzw. dem Wasser in der Wasserleitung hat bzw. benötigt. Um gesetzlichen Ansprüchen zu genügen kann der Wasserzähler insbesondere für Abrechnungszwecke entsprechenden (Standardmess-)Normen entsprechen. Die Volumenstrommesseinrichtung kann mit einer Steuerung des Wasserzählers verbunden sein, die insbesondere einen Mikroprozessor umfassen kann. Die Steuerung kann auch als (externes) elektronisches Gerät, beispielsweise nach Art eines elektronischen Lesegeräts, Smartphones, Computers oder (Internet-)Servers ("Cloud-Server"), ausgebildet sein. Der Wasserzähler und/oder die Steuerung können zur Messung und/oder Berechnung des Volumenstroms kalibrierbar sein. Die Kalibrierung kann auf zumindest einem Algorithmus basieren, der insbesondere zumindest einen Parameter, wie z. B. Alter der Installation des Wasserzählers, Rohrmaterial der Wasserleitung, Rohrdicke der Wasserleitung (Innen- und/oder Außendurchmesser) und/oder Flüssigkeitsdruck der Flüssigkeit in der Wasserleitung, berücksichtigt. Der Wasserzähler und/oder die Steuerung können zur Messung und/oder Berechnung des Volumenstroms konfigurierbar sein. Die Konfiguration kann unter Berücksichtigung bzw. auf Basis zumindest eines der vorgenannten Parameter erfolgen. Durch die Steuerung ist insbesondere anhand von Messwerten der Volumenstrommesseinrichtung der Wasserverbrauch bzw. ein Wasservolumen bestimmbar, das durch den zumindest einen Verbraucher und/oder die zumindest eine Verbrauchseinheit innerhalb einer bestimmten Zeitspanne verbraucht wurde. Die Wasserleitung verbindet den Verbraucher bzw. die Verbrauchseinheit insbesondere mit einer Wasserquelle, wie zum Beispiel einem öffentlichen Wasserversorgungsnetz. Der Wasserverbrauch kann beispielsweise an dem Wasserzähler anzeigbar sein. Die Wasserleitung kann insbesondere stromaufwärts zu dem Wasserzähler ein Ventil aufweisen, mittels dem die Wasserleitung absperrbar ist. In einem stromabwärts zu dem Wasserzähler befindlichen Bereich ist jedoch innerhalb der Wasserleitung insbesondere kein Ventil erforderlich. "Innerhalb der Wasserleitung" bedeutet in diesem Zusammenhang insbesondere in einem Bereich, der kein (längsseitiges) Ende der Wasserleitung darstellt.

Weiterhin umfasst der Wasserzähler eine Klemmeinrichtung, mittels der der Wasserzähler an die Wasserleitung klemmbar ist. Dies kann insbesondere bedeuten, dass der Wasserzähler nicht (direkt) mit der Wasserleitung verschraubt und/oder mit einem längsseitigen Ende der Wasserleitung verbunden ist. Insbesondere ist der Wasserzähler ausschließlich mit der Klemmeinrichtung an der Wasserleitung befestigbar. Durch das Festklemmen ist der Wasserzähler insbesondere an der Wasserleitung nicht bewegbar bzw. fest in einer bestimmten Lage an der Wasserleitung gehalten. Die Klemmeinrichtung kann beispielsweise zumindest eine Klemmbacke umfassen, die die Wasserleitung insbesondere zumindest teilweise umgreift. Weiterhin kann die Klemmeinrichtung beispielsweise ein (insbesondere flexibles) Klemmelement, beispielsweise nach Art eines Gurts, (Gummi-)Bands oder einer Kette, aufweisen, das sich nach der Befestigung des Wasserzählers an der Wasserleitung um die Wasserleitung herum erstreckt. Durch die Klemmeinrichtung ist der Wasserzähler mit geringem Montageaufwand an der Wasserleitung befestigbar. Insbesondere muss eine Wasserversorgung nicht unterbrochen und die Wasserleitung nicht durchtrennt werden.

Der Volumenstrom der Flüssigkeit kann durch die Volumenstrommesseinrichtung mittels Ultraschall, Vibrationsmessung, Temperaturmessung und/oder Geräuschmessung messbar sein. Eine Messung kann somit insbesondere durch eine Außenwand der Wasserleitung hindurch erfolgen. Weiterhin kann die Messung des Volumenstroms unter Berücksichtigung zumindest eines Parameters, wie z. B. Alter der Installation des Wasserzählers, Rohrmaterial der Wasserleitung, Rohrdicke der Wasserleitung (Innen- und/oder Außendurchmesser) und/oder Flüssigkeitsdruck der Flüssigkeit in der Wasserleitung, erfolgen. Zudem können zur Messung des Volumenstroms der Flüssigkeit mittels Ultraschall, Vibrationsmessung, Temperaturmessung und/oder Geräuschmessung der Wasserzähler und/oder die Steuerung unter Berücksichtigung der vorgenannten Parameter und/oder mit Hilfe des zumindest einen Algorithmus kalibrierbar und/oder konfigurierbar sein.

Der Wasserzähler kann mittels der Klemmeinrichtung an eine Umfangsfläche der Wasserleitung klemmbar sein.

Die Klemmeinrichtung kann gegen ein unberechtigtes Lösen sicherbar sein. Hierzu kann für das Lösen der Klemmeinrichtung beispielsweise ein Schlüssel oder ein spezielles Werkzeug erforderlich sein. Weiterhin kann der Wasserzähler bzw. die Klemmeinrichtung beispielsweise mittels eines Siegels gegen ein unberechtigtes Lösen sicherbar sein. Hierdurch können Manipulationen erkannt und/oder bewiesen werden.

Durch den Wasserzähler kann bei einem unberechtigten Lösen des Wasserzählers von der Wasserleitung ein Alarmsignal abgebbar sein. Hierzu kann der Wasserzähler beispielsweise einen Signalgeber, wie zum Beispiel einen Lautsprecher oder ein Signallicht, aufweisen oder das Alarmsignal an ein elektronisches Gerät senden. Bei dem elektronischen Gerät kann es sich insbesondere um ein elektronisches Lesegerät, ein Smartphone, ein Computer oder einen (Internet-)Server ("Cloud-Server") handeln. Der Wasserzähler kann hierzu beispielsweise per Funk, Router und/oder Modem mit dem elektronischen Gerät verbunden sein. Die Verbindung kann beispielsweise via Ethernet, WLAN, Bluetooth, ZigBee, Mobilfunk, LTE, 4G, 5G, NBlot, M-Bus etc. erfolgen. Zudem kann der Wasserzähler einen Sensor aufweisen, mit dem das unberechtigte Lösen des Wasserzählers detektierbar ist. Insbesondere kann der Wasserzähler und/oder der Sensor das Alarmsignal an das elektonische Gerät senden.

Durch den Wasserzähler kann ein Wasserverbrauch der Flüssigkeit an ein elektronisches Gerät übertragbar sein. Bei dem elektronischen Gerät kann es sich insbesondere um ein elektronisches Lesegerät, ein Smartphone, ein Computer oder einen (Internet-)Server ("Cloud-Server") handeln. Der Wasserzähler kann hierzu beispielsweise per Funk, Router und/oder Modem mit dem elektronischen Gerät verbunden sein. Die Verbindung kann beispielsweise via Ethernet, WLAN, Bluetooth, ZigBee, Mobilfunk, LTE, 4G, 5G, NBlot, M-Bus etc. erfolgen.

Der Wasserzähler kann zur Ausbildung der Klemmeinrichtung mehrteilig ausgebildet sein. Beispielsweise kann der Wasserzähler ein erstes Teil des Wasserzählers und ein zweites Teil umfassen, die insbesondere über ein Scharnier miteinander verbunden sein können. Die beiden Teile können insbesondere zumindest teilweise schalenförmig ausgebildet sein und/oder zumindest eine, insbesondere zumindest teilweise runde, Ausnehmung für die Wasserleitung aufweisen. Bei der Befestigung des Wasserzählers können die beiden Teile insbesondere auf zwei, insbesondere gegenüberliegenden, Seiten der Wasserleitung angeordnet und an einem dem Scharnier gegenüberliegenden Ende mit einem Befestigungsmittel, wie zum Beispiel einer Schraube, verbunden werden. Hierdurch ist die Wasserleitung insbesondere zwischen den beiden Teilen einklemmbar.

Der Wasserzähler kann zur Auswertung von Messwerten der Volumenstrommesseinrichtung eingerichtet sein. Insbesondere kann die Steuerung des Wasserzählers dazu eingerichtet sein, durch Auswertung von Messwerten der Volumenstrommesseinrichtung ungewöhnliche Wasserverbräuche und/oder Leckagen an der Wasserleitung festzustellen. Alternativ kann der Wasserzähler die Messwerte der Volumenstrommesseinrichtung zur Auswertung auch an das elektronische Gerät senden. Im Falle von ungewöhnlichen Wasserverbräuchen und/oder Leckagen kann durch den Wasserzähler und/oder das elektronische Gerät ein Alarmsignal sendbar sein. Der Wasserzähler und/oder die Volumenstrommesseinrichtung können als Hauptanwendung der Abrechnung des Wasserverbrauchs und als Nebenanwendung der Feststellung ungewöhnlicher Wasserverbräuche dienen. Des Weiteren kann mittels des Wasserzählers und/oder der Volumenstrommesseinrichtung eine Fließrichtung der Flüssigkeit durch die Wasserleitung erkennbar bzw. bestimmbar sein.

Der Wasserzähler kann zur Energieversorgung zumindest eine Batterie aufweisen. Hierdurch ist der Wasserzähler insbesondere unabhängig von einem kabelgebundenen Energienetz.

Einem weiteren Aspekt folgend, wird auch ein Verfahren zur Befestigung eines Wasserzählers an einer Wasserleitung vorgeschlagen, bei dem der Wasserzähler mithilfe einer Klemmverbindung an der Wasserleitung befestigt wird. Bei dem Wasserzähler handelt es sich insbesondere um einen hier beschriebenen Wasserzähler bzw. einen erfindungsgemäßen Wasserzähler.

Für weitere Einzelheiten des Verfahrens wird vollumfänglich auf die Beschreibung des Wasserzählers verwiesen.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigen beispielhaft und schematisch:
- Fig. 1:: einer Wasserleitung mit einem Wasserzähler in einem Längsschnitt; und
- Fig. 2:: Wasserleitung mit dem Wasserzähler in einem Querschnitt.

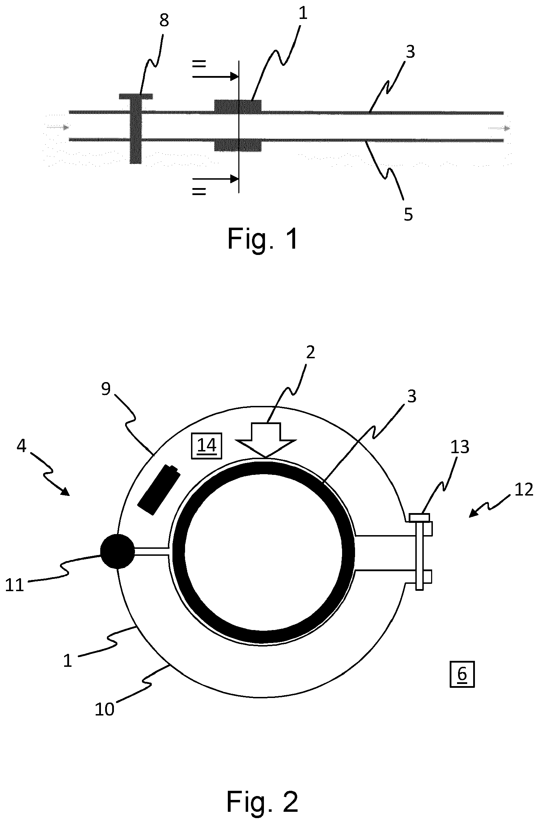

Die Fig. 1 zeigt eine Wasserleitung 3 mit einem Wasserzähler 1 in einem Längsschnitt. Der Wasserzähler 1 ist über eine in der Fig. 2 gezeigte Klemmeinrichtung 4 an einer Umfangsfläche 5 der Wasserleitung 3 festgeklemmt, sodass der Wasserzähler 1 an der Wasserleitung 3 nicht bewegbar ist. Stromaufwärts zu dem Wasserzähler 1 ist in der Wasserleitung 3 ein Ventil 8 angeordnet, mit dem die Wasserleitung 3 verschließbar ist. Das Ventil 8 könnte auch stromabwärts zu dem Wasserzähler 1 in der Wasserleitung 3 angeordnet sein. Zudem könnte auch kein Ventil 8 in der Wasserleitung 3 und/oder nur an einem hier nicht gezeigten Ende der Wasserleitung 3 angeordnet sein.

Die Fig. 2 zeigt die Wasserleitung 3 mit dem Wasserzähler 1 in einem Querschnitt entlang der in der Fig. 1 gezeigten Schnittlinie II-II. Zur Ausbildung einer Klemmeinrichtung 4 ist der Wasserzähler 1 aus einem ersten Teil 9 und einem zweiten Teil 10 gebildet, die über ein Scharnier 11 miteinander verbunden sind. Zur Befestigung des Wasserzählers 1 an der Wasserleitung 3 sind dem Scharnier 11 gegenüberliegende Enden 12 der Teile 9, 10 des Wasserzählers 1 mit einer Schraube 13 verbunden, sodass der Wasserzähler 1 an der Wasserleitung 3 festgeklemmt ist. Der Wasserzähler 1 umfasst eine Volumenstrommesseinrichtung 2 mittels der von außerhalb der Wasserleitung 3 ein durch die Wasserleitung 3 strömender Volumenstrom einer Flüssigkeit messbar ist. Hierzu ist die Volumenstrommesseinrichtung 2 mit einer Steuerung 14 des Wasserzählers 1 verbunden, durch die ein Wasserverbrauch einer hier nicht gezeigten Verbrauchseinheit bestimmbar ist. Die Steuerung 14 ist über eine Batterie 7 des Wasserzählers 1 mit Energie versorgbar. Der gemessene Wasserverbrauch ist durch die Steuerung 14 auf einem hier nicht gezeigten Display des Wasserzählers anzeigbar und/oder, beispielsweise per Funk und/oder über ein Internet-Gateway, an ein elektronisches Gerät 6 sendbar.

Durch die vorliegende Erfindung kann ein Wasserzähler mit geringem Montageaufwand an einer Wasserleitung befestigt werden.

### Bezugszeichenliste

- 1: Wasserzähler
- 2: Volumenstrommesseinrichtung
- 3: Wasserleitung
- 4: Klemmeinrichtung
- 5: Umfangsfläche
- 6: elektronisches Gerät
- 7: Batterie
- 8: Ventil
- 9: erstes Teil
- 10: zweites Teil
- 11: Scharnier
- 12: Enden
- 13: Schraube
- 14: Steuerung

## Patentansprüche

1. Wasserzähler (1), zumindest aufweisend:
- eine Volumenstrommesseinrichtung (2), mittels der von außerhalb einer Wasserleitung (3) ein durch die Wasserleitung (3) strömender Volumenstrom einer Flüssigkeit messbar ist; und
- eine Klemmeinrichtung (4), mittels der der Wasserzähler (1) an die Wasserleitung (3) klemmbar ist.

2. Wasserzähler (1) nach Patentanspruch 1, wobei der Volumenstrom der Flüssigkeit durch die Volumenstrommesseinrichtung (2) mittels Ultraschall, Vibrationsmessung oder Geräuschmessung messbar ist.

3. Wasserzähler (1) nach Patentanspruch 1, wobei der Wasserzähler (1) mittels der Klemmeinrichtung (4) an eine Umfangsfläche (5) der Wasserleitung (3) klemmbar ist.

4. Wasserzähler (1) nach einem der vorhergehenden Patentansprüche, wobei die Klemmeinrichtung (4) gegen ein unberechtigtes Lösen sicherbar ist.

5. Wasserzähler (1) nach einem dervorhergehenden Patentansprüche, wobei durch den Wasserzähler (1) bei einem unberechtigten Lösen des Wasserzählers (1) von der Wasserleitung (3) ein Alarmsignal abgebbar ist.

6. Wasserzähler(1) nach einem dervorhergehenden Patentansprüche, wobei durch den Wasserzähler (1) ein Wasserverbrauch der Flüssigkeit an ein elektronisches Gerät (6) übertragbar ist.

7. Wasserzähler (1) nach einem der vorhergehenden Patentansprüche, wobei der Wasserzähler (1) zur Ausbildung der Klemmeinrichtung (4) mehrteilig ausgebildet ist.

8. Wasserzähler (1) nach einem der vorhergehenden Patentansprüche, wobei der Wasserzähler (1) zur Auswertung von Messwerten der Volumenstrommesseinrichtung eingerichtet ist.

9. Wasserzähler (1) nach einem der vorhergehenden Patentansprüche, wobei der Wasserzähler (1) zur Energieversorgung zumindest eine Batterie (7) aufweist.

10. Verfahren zur Befestigung eines Wasserzählers (1) an einer Wasserleitung (3), bei dem der Wasserzähler (1) mithilfe einer Klemmverbindung an der Wasserleitung (3) befestigt wird.
